# EUROPEAN PATENT APPLICATION

(11) **EP 4 654 302 A1**
(43) Date of publication of application: **26.11.2025**
(21) Application number: 25172857.2
(22) Date of filing: 28.04.2025
(51) Int. Cl.: H01M 4/66, H01M 10/0583, H01M 10/0585, H01M 4/70, H01M 4/02

(54) **COMPOSITE SUBSTRATE, ELECTRODE ASSEMBLY USING SAME, AND METHOD OF MANUFACTURING THE ELECTRODE ASSEMBLY**

(30) Priority: 24.05.2024 KR 20240068135
(71) Applicant: SAMSUNG SDI CO., LTD., Yongin-si, Gyeonggi-do 17084 (KR)
(72) Inventor: Lee, Jeawoan, 17084 Yongin-si, Gyeonggi-do (KR)
(74) Representative: Gulde & Partner

(57) **Abstract**

A composite substrate comprises a polymer substrate, a first metal layer disposed on a first surface of the polymer substrate, and a second metal layer disposed on a second surface of the polymer substrate opposite the first surface, wherein the first metal layer and the second metal layer comprise different materials, and either the first metal layer or the second metal layer has a smaller thickness than the polymer substrate in a first direction.

## Description

### FIELD

Aspects of embodiments of the present disclosure relate to a composite substrate, an electrode assembly using the same, and a method of manufacturing the electrode assembly.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, there has been customer demand for reduced battery weight for secondary batteries for small portable IT devices and automotive applications. For example, medium and large secondary cells are used in mobility applications such as drones and electric vehicles. In this case, more energy may be required due to the weight of the secondary battery as well as the weight of the mobility vehicle itself. This may lead to problems associated with reduced energy density and efficiency of the secondary battery.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

Embodiments of the present disclosure provide a composite substrate, an electrode assembly using the same, and a method of manufacturing the electrode assembly.

These and other aspects and features of the present disclosure will be described in or will be apparent from the following description of embodiments of the present disclosure.

A composite substrate of the present disclosure includes a polymer substrate, a first metal layer (directly) disposed on a first surface of the polymer substrate, and a second metal layer (directly) disposed on a second surface of the polymer substrate, the second surface of the polymer substrate opposite the first surface of the polymer substrate, wherein the first metal layer and the second metal layer comprise (or consist of) different (metallic) materials, and the first metal layer and/or the second metal layer have a thickness smaller than the thickness of the polymer substrate in a first direction. For example, the first metal layer and the second metal layer have a thickness smaller than the thickness of the polymer substrate in the first direction.

In some embodiments, the first metal layer has a width smaller than the width of the second metal layer in a second direction perpendicular to the first direction.

In some embodiments, a difference between a width of the first metal layer and a width of the second metal layer is 3 mm or less.

In some embodiments, the first metal layer has a length smaller than the length of the second metal layer in a third direction perpendicular to both the first direction and the second direction.

In some embodiments, a difference between the length of the first metal layer and the length of the second metal layer is 3 mm or less.

In some embodiments, the thickness of the first metal layer is greater than or equal to 1.0 µm and less than or equal to 2.0 µm.

In some embodiments, the thickness of the second metal layer is greater than or equal to 0.5 µm and less than or equal to 1.5 µm.

In some embodiments, the thickness of the polymer substrate is greater than or equal to 5.0 µm and less than or equal to 7.0 µm.

In some embodiments, the thickness of the first metal layer is greater than or equal to 15% of the thickness of the polymer substrate and less than or equal to 40% of the thickness of the polymer substrate, and the thickness of the second metal layer is greater than or equal to 10% of the thickness of the polymer substrate and less than or equal to 30% of the thickness of the polymer substrate.

An electrode assembly of the present disclosure includes a plurality of first electrode plates stacked on each other, and

a separator disposed between adjacent first electrode plates, wherein each of the first electrode plates comprises a composite substrate, a first active material layer applied to a first surface of the composite substrate, and a second active material layer applied to a second surface of the composite substrate, the second surface of the composite substrate opposite the first surface of the composite substrate, wherein the composite substrate comprises a first polymer substrate, a first metal layer disposed on a first surface of the first polymer substrate, and a second metal layer disposed on a second surface of the first polymer substrate, the second surface of the first polymer substrate opposite the first surface the first polymer substrate, wherein the first metal layer and the second metal layer comprise different materials, and the first metal layer and/or the second metal layer have a thickness smaller than the thickness of the polymer substrate in a first direction.

**In** some embodiments, the electrode assembly further includes a second electrode plate disposed under the first electrode plates, and a third electrode plate disposed over the first electrode plates, wherein the separator is disposed between the first electrode plates and the second electrode plate, the separator is disposed between the first electrode plates and the third electrode plate, and the second electrode plate and the third electrode plate are different from each other.

**In** some embodiments, the second electrode plate comprises a second polymer substrate, a third metal layer disposed on a first surface of the second polymer substrate, and a third active material layer disposed on the third metal layer, the third electrode plate comprises a third polymer substrate, a fourth metal layer disposed on a first surface of the third polymer substrate, and a fourth active material layer disposed on the fourth metal layer, the third metal layer and the fourth metal layer comprise different materials, and the third active material layer and the fourth active material layer comprise different materials.

**In** some embodiments, the third active material layer is disposed between the separator and the third metal layer, and the fourth active material layer is disposed between the separator and the fourth metal layer.

In some embodiments, a second surface of the second polymer substrate and a second surface of the third polymer substrate are exposed to an exterior of the electrode assembly.

In some embodiments, the second electrode plate further comprises a fifth metal layer disposed on a second surface of the second polymer substrate, the third electrode plate further comprises a sixth metal layer disposed on a second surface of the third polymer substrate, and one surface of the fifth metal layer and one surface of the sixth metal layer are exposed to an exterior of the electrode assembly.

In some embodiments, the separator covers a second surface of the second polymer substrate and a second surface of the third polymer substrate.

In some embodiments, the second electrode plate further comprises a fifth metal layer disposed on a second surface of the second polymer substrate,

the third electrode plate further comprises a sixth metal layer disposed on a second surface of the third polymer substrate, and the separator covers one surface of the fifth metal layer and one surface of the sixth metal layer.

A method of manufacturing an electrode assembly of the present disclosure includes preparing a plurality of first electrode plates, and stacking the first electrode plates while disposing a separator between the first electrode plates, wherein each of the first electrode plates comprises a composite substrate, a first active material layer applied to a first surface of the composite substrate, and a second active material layer applied to a second surface of the composite substrate, the second surface of the composite substrate opposite the first surface of the composite substrate, wherein the composite substrate comprises a polymer substrate, a first metal layer disposed on a first surface of the polymer substrate, and a second metal layer disposed on a second surface of the polymer substrate, the second surface of the polymer substrate opposite the first surface of the polymer substrate, wherein the first metal layer and the second metal layer comprise different materials, and the first metal layer and/or the second metal layer have a thickness smaller than the thickness of the polymer substrate in a first direction.

In some embodiments, the operation of preparing the first electrode plates comprises disposing the first metal layer on the first surface of the polymer substrate using a first masking plate, and disposing the second metal layer on the second surface of the polymer substrate opposite the first surface of the polymer substrate, wherein an opening of the masking plate has a width smaller than the width of an opening of the second masking plate.

In some embodiments, the method further includes disposing a second electrode plate under the first electrode plates, and disposing a third electrode plate over the first electrode plates, wherein the separator is disposed between the first electrode plates and the second electrode plate, the separator is disposed between the first electrode plates and the third electrode plate, and the second electrode plate and the third electrode plate are different from each other.

According to some embodiments of the present disclosure, an integral substrate including a positive electrode and a negative electrode may be formed by disposing different metal layers on a polymer substrate of the composite substrate. Furthermore, by using the composite substrate, the volume of the collector may be reduced. Accordingly, the energy density of a secondary battery manufactured using such a composite substrate may be increased.

According to some embodiments of the present disclosure, the thicknesses of the Al and Cu layers may be optimized, thereby improving the performance of the secondary battery while reducing the thickness of the composite substrate.

Those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a side diagram showing an example of a composite substrate according to some embodiments of the present disclosure.
FIG. 2 illustrates an example in which a first metal layer and a second metal layer according to some embodiments of the present disclosure are compared.
FIG. 3 illustrates a flowchart showing an example of a composite substrate manufacturing method according to some embodiments of the present disclosure.
FIG. 4 illustrates a schematic diagram showing an example of a method of manufacturing a composite substrate according to some embodiments of the present disclosure.
FIG. 5 illustrates an example of an electrode plate according to some embodiments of the present disclosure.
FIG. 6 illustrates an example of an electrode assembly according to some embodiments of the present disclosure.
FIG. 7 illustrates an example of an electrode assembly according to some embodiments of the present disclosure.
FIG. 8 illustrates an example of an electrode assembly according to some embodiments of the present disclosure.
FIG. 9 illustrates an example of an electrode assembly according to some embodiments of the present disclosure.
FIG. 10 illustrates a graph showing resistance values according to the thickness of metal layers disposed on opposite surfaces of a polymer substrate according to some embodiments of the present disclosure.
FIG. 11 illustrates a flowchart showing an example of an electrode assembly manufacturing method according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In a laminated battery and a laminated battery manufacturing method/system according to example embodiments, either a laminated cell or a wound cell is selected and described as having a typical structure. For commonly used technologies, the typical structure of a laminated/wound cell is described.

In the present disclosure, the term "electrode assembly" may be formed or manufactured by winding or stacking a laminate of a positive electrode plate, a separator, and a negative electrode plate each formed as a thin plate or film. In this case, the positive electrode plate may be formed by applying a positive electrode active material, such as graphite or carbon, to a positive electrode collector plate formed using a metal foil or a metal layer of, for example, aluminum. The negative electrode plate may also be formed by applying a negative electrode active material, such as a transition metal oxide, to a negative electrode collector plate formed as a metal foil or metal layer of, e.g., copper or nickel. Herein, the metal foil or the metal layer may be a metal foil or a metal layer disposed on a polymer substrate.

As used herein, the term "separator" may refer to an intermediate film that isolates the positive electrode and the negative electrodes in a cell from each other while constantly maintaining ionic conductivity to allow the cell to be charged and discharged. The separator may include, for example, but is not limited to, polyethylene, polypropylene, polyvinylidene fluoride, and/or a multiple-layer film of two or more layers thereof.

In the present disclosure, the sizes and relative dimensions of the layers and regions shown in the drawings may be exaggerated for clarity of description. That is, the sizes shown in the drawings are for ease of understanding only and are not intended to be limiting. In addition, throughout the specification, like reference numerals refer to like components.

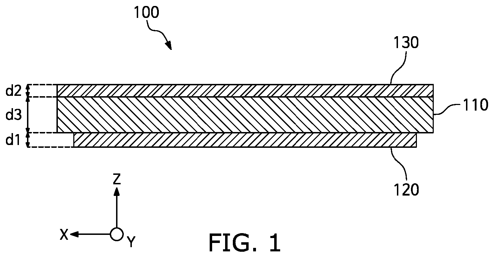

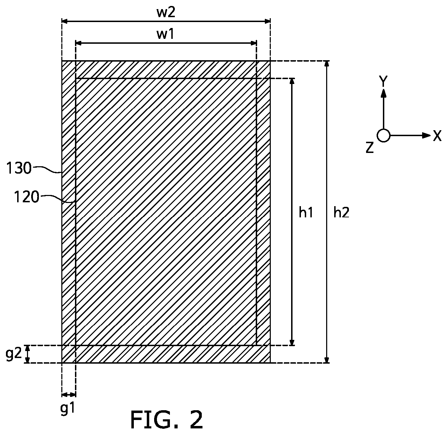

FIG. 1 illustrates a side diagram showing an example of a composite substrate 100 according to some embodiments of the present disclosure, and FIG. 2 illustrates an example in which a first metal layer 120 and a second metal layer 130 according to some embodiments of the present disclosure are compared.

The composite substrate 100 includes a polymer substrate 110, a first metal layer 120 disposed on a first surface of the polymer substrate 110, and a second metal layer 130 disposed on a second surface of the polymer substrate 110 that is opposite the first surface of the polymer substrate 110. Herein, the first metal layer 120 and the second metal layer 130 include different materials. For example, the first metal layer 120 may include aluminum (Al) and the second metal layer 130 may include copper (Cu). In addition, the polymer substrate 110 may include polyethylene terephthalate (PET).

The thickness d1 of the first metal layer 120 and the thickness d2 of the second metal layer 130 in a first direction (or the Z direction) are smaller than the thickness d3 of the polymer substrate 110. Herein, the thickness d1 of the first metal layer 120 may range from 1.0 µm to 2.0 µm. Furthermore, the thickness d2 of the second metal layer 130 may range from 0.5 µm to 1.5 µm, but is not limited thereto. Furthermore, the thickness d3 of the polymer substrate 110 may range from 5.0 µm to 7.0 µm.

The ratio of the thickness d1 of the first metal layer 120 to the thickness d2 of the second metal layer 130 may range from 1:1.5 to 4:1. More specifically, the ratio of the thickness d1 of the first metal layer 120 to the thickness d2 of the second metal layer 130 may be 2:1. In some embodiments, the thickness d1 of the first metal layer 120 may range from 15% to 40% of the thickness d3 of the polymer substrate 110. In this case, the thickness d2 of the second metal layer 130 may range from 10% to 30% of the thickness d3 of the polymer substrate 110.

In some embodiments, in the second direction perpendicular to the first direction (or in the X direction or the transverse direction (TD) direction), the width w1 of the first metal layer 120 may be smaller than the width w2 of the second metal layer 130. In some embodiments, the difference between the width w1 of the first metal layer 120 and the width w2 of the second metal layer 130 may be 3 mm or less. In some embodiments, in a case where the centers of the first metal layer 120 and the second metal layer 130 are equally aligned, the difference g1 between the width of a first side of the first metal layer 120 and the width of a first side of the second metal layer 130 may be 1.5 mm or less.

In some embodiments, in a third direction perpendicular to the first and second directions (or in the Y direction or the machine direction (MD) direction), the length h1 of the first metal layer 120 may be smaller than the length h2 of the second metal layer 130. In some embodiments, the difference between the length h1 of the first metal layer 120 and the length h2 of the second metal layer 130 may be 3 mm or less. In some embodiments, in a case where the centers of the first metal layer 120 and the second metal layer 130 are equally aligned, the difference g2 between the length of the first side of the first metal layer 120 and the length of the first side of the second metal layer 130 may be 1.5 mm or less.

In this configuration, an integral substrate including a positive electrode and a negative electrode may be formed by disposing different metal layers on a polymer substrate of the composite substrate. Furthermore, by using the composite substrate, the volume of the collector may be reduced. Accordingly, the energy density of a secondary battery manufactured using such a composite substrate may be increased.

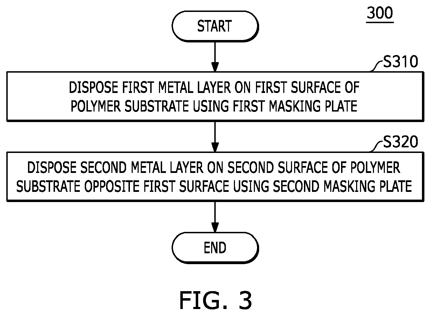

FIG. 3 illustrates a flowchart showing an example of a composite substrate manufacturing method 300 according to some embodiments of the present disclosure. In some embodiments, a composite substrate manufacturing method 300 may be started by disposing a first metal layer on a first surface of a polymer substrate using a first masking plate (S310). Thereafter, a second metal layer may be disposed on a second surface of the polymer substrate opposite the first surface using a second masking plate (S320). Herein, the width of an opening of the first masking plate may be smaller than the width of an opening of the second masking plate. Accordingly, the width of the first metal layer disposed on the manufactured composite substrate may be smaller than the width of the second metal layer.

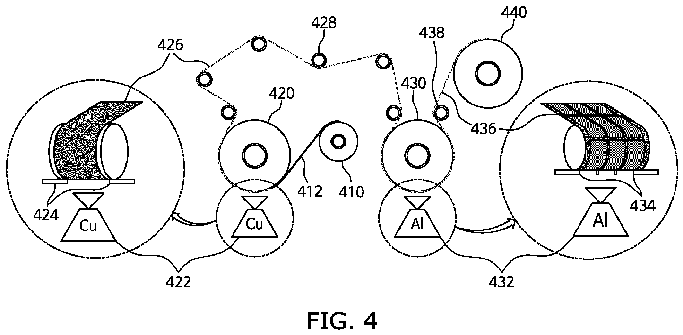

The first metal layer is described as being disposed before the second metal layer in FIG. 3, but is not limited thereto, and the second metal layer may be disposed before the first metal layer. The composite substrate manufacturing method 300 will be described in detail below with reference to FIG. 4.

FIG. 4 illustrates a schematic diagram showing an example of a method of manufacturing a composite substrate according to some embodiments of the present disclosure. In some embodiments, a polymer substrate 412 wound on a first roller 410 may be moved to a second roller 420. As the polymer substrate 412 passes through the second roller 420, a first metal layer (e.g., a Cu layer) may be disposed on a first surface of the polymer substrate 412 by a first sprayer 422. In this case, the first surface of the polymer substrate 412 may be coated with the first metal layer in response to the first sprayer 422 spraying the material of the first metal layer (e.g., Cu) toward the polymer substrate 412 through an opening of a first masking plate 424.

In some embodiments, a polymer substrate 426 with the first metal layer disposed on a first surface thereof may be moved to a third roller 430 via at least one first traveling roller 428 or the like. As the polymer substrate 426 passes through a third roller 430, a second metal layer (e.g., an Al layer) may be disposed on a second surface of the polymer substrate 426 by a second sprayer 432. In this case, the second surface of the polymer substrate 426 may be coated with the second metal layer in response to the second sprayer 432 spraying the material of the second metal layer (e.g., Al) toward the polymer substrate 426 through an opening of a second masking plate 434.

In some embodiments, the width of the opening of the first masking plate 424 and the width of the opening of the second masking plate 434 may be determined based on the width of the first metal layer and the width of the second metal layer, respectively. Thus, in a case where the width of the second metal layer is smaller than the width of the first metal layer, the width of the opening of the second masking plate 434 may be smaller than the width of the opening of the first masking plate 424. In this case, the second sprayer 432 may spray a material in a stop-and-go manner such that the length of the second metal layer smaller is than the length of the first metal layer.

In some embodiments, the composite substrate 436 manufactured by coating both sides with the metal layer may be moved to a fourth roller 440 via the at least one second traveling roller 438. In addition, the composite substrate 436 may be wound on the fourth roller 440.

While FIG. 4 illustrates the metal layers being formed on the polymer substrates 412 and 426 by spraying the metal layer material, the metal layers may be deposited or coated on the polymer substrates 412 and 426 in a variety of manners. In addition, while FIG. 4 illustrates the first metal layer being coated before the second metal layer, the present disclosure is not limited thereto, and the second metal layer may be coated before the first metal layer.

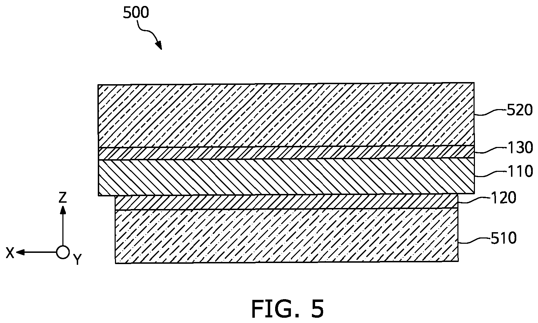

FIG. 5 illustrates an example of an electrode plate 500 according some to embodiments of the present disclosure. In some embodiments, the electrode plate 500 may include the polymer substrate 110 described above with reference to FIG. 1, the first metal layer 120, the second metal layer 130, a first active material layer 510 applied to the first metal layer 120, and a second active material layer 520 applied to the second metal layer 130. Herein, the first metal layer 120 and the second metal layer 130 may include different materials. For example, the first metal layer 120 may include, but is not limited to, aluminum (Al), and the second metal layer 130 may include, but is not limited to, copper (Cu). In this case, the first active material layer 510 may include a positive electrode active material and the second active material layer 520 may include a negative electrode active material.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.
be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

In some embodiments, the first active material layer 510 may be disposed on a second surface of the first metal layer 120 opposite a first surface on which the first metal layer 120 is in contact with the polymer substrate 110. Similarly, the second active material layer 520 may be disposed on a second surface of the second metal layer 130 that is opposite a first surface on which the second metal layer 130 is in contact with the polymer substrate 110. Furthermore, the width and length of the first active material layer 510 may correspond to the width and length of the first metal layer 120.

In FIG. 5, the electrode plate 500 is shown as including the polymer substrate 110, the first metal layer 120, the second metal layer 130, the first active material layer 510, and the second active material layer 520, but is not limited thereto, and some components may be omitted. For example, the first active material layer 510 may be omitted or the second active material layer 520 may be omitted. In another example, the first active material layer 510 and the first metal layer 120 may be omitted. In another example, the second metal layer 130 and the second active material layer 520 may be omitted.

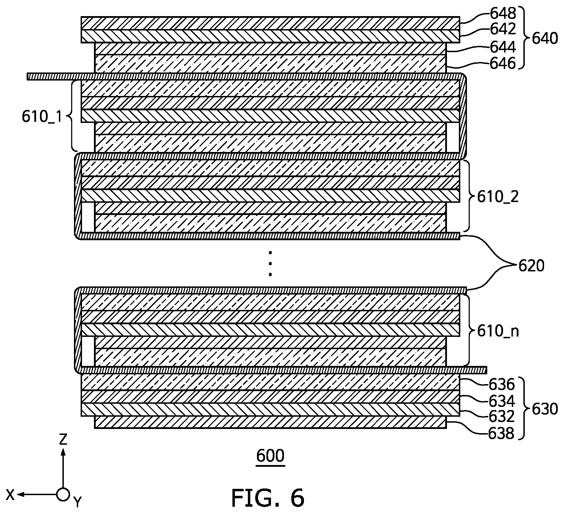

FIG. 6 illustrates an example of an electrode assembly 600 according some to embodiments of the present disclosure. In some embodiments, the electrode assembly 600 may include a plurality of first electrode plates 610_1 to 610_n, a separator 620, a second electrode plate 630, and a third electrode plate 640 that are stacked (i.e., laminated) on each other. For example, the first electrode plates 610_1 to 610_n may be arranged and stacked in the same orientation. Herein, each electrode plate included in the first electrode plates 610_1 to 610_n may be the electrode plate 500 described above with reference to FIG. 5. That is, each of the first electrode plates 610_1 to 610_n may include a composite substrate, a first active material layer applied to a first surface of the composite substrate, and a second active material layer applied to a second surface of the composite substrate opposite the first surface. Furthermore, the composite substrate may include a first polymer substrate, a first metal layer disposed on a first surface of the first polymer substrate, and a second metal layer disposed on a second surface of the first polymer substrate opposite the first surface. In this case, the thickness of either the first metal layer or the second metal layer may be smaller than the thickness of the polymer substrate in a first direction (or the Z direction). In some embodiments, the first metal layer may include aluminum (Al) and the second metal layer may include copper (Cu).

In some embodiments, the separator 620 may be disposed between adjacent first electrode plates among the first electrode plates 610_1 to 610_n. Furthermore, the separator 620 may be disposed between each of the lowermost electrode plate (e.g. 610_n) among the first electrode plates 610_1 to 610_n and the second electrode plate 630 and between each of the uppermost electrode plate (e.g. 610_1) among the first electrode plates 610_1 to 610_n and the third electrode plate 640.

In some embodiments, the second electrode plate 630 and the third electrode plate 640 may include different types of layers. Specifically, the second electrode plate 630 may include a second polymer substrate 632, a third metal layer 634 disposed on a first surface of the second polymer substrate, and a third active material layer 636 disposed on the third metal layer 634. Furthermore, the third electrode plate 640 may include a third polymer substrate 642, a fourth metal layer 644 disposed on a first side of the third polymer substrate, and a fourth active material layer 646 disposed on the fourth metal layer 644.

In addition, the second electrode plate 630 may further include a fifth metal layer 638 disposed on a second surface of the second polymer substrate 632, and the third electrode plate 640 may further include a sixth metal layer 648 disposed on a second surface of the third polymer substrate 642. In this case, one surface of the fifth metal layer 638 and one surface of the sixth metal layer 648 may be exposed to the exterior. That is, the electrode assembly 600 may be asymmetrically shaped.

In some embodiments, the third metal layer 634 and the fourth metal layer 644 may include different materials. For example, the third metal layer 634 may include, but is not limited to, Cu, and the fourth metal layer 644 may include, but is not limited to, Al. In this case, the third active material layer 636 may be a negative electrode active material layer and the fourth active material layer 646 may be a positive electrode active material layer. Herein, the third active material layer 636 may be disposed between the separator 620 and the third metal layer 634, and the fourth active material layer 646 may be disposed between the separator 620 and the fourth metal layer 644. Similarly, the fifth metal layer 638 and the sixth metal layer 648 may include different materials. For example, the fifth metal layer 638 may include, but is not limited to, Al, and the sixth metal layer 648 may include, but is not limited to, Cu.

In some embodiments, the composite substrate included in each of the first electrode plates 610_1 to 610_n and the composite substrate included in each of the second electrode plate 630 and third electrode plate 640 may be the same. Herein, in contrast to the active material layer being applied to the opposite surfaces of the composite substrate included in each of the first electrode plates 610_1 to 610_n, the active material layer may be applied to the first surface of the composite substrate included in each of the second electrode plate 630 and the third electrode plate 640. Using the same composite substrates for the first electrode plates 610_1 to 610_n, the second electrode plate 630, and the third electrode plate 640 to manufacture the electrode assembly 600 as described above may reduce the complexity of the manufacturing process.

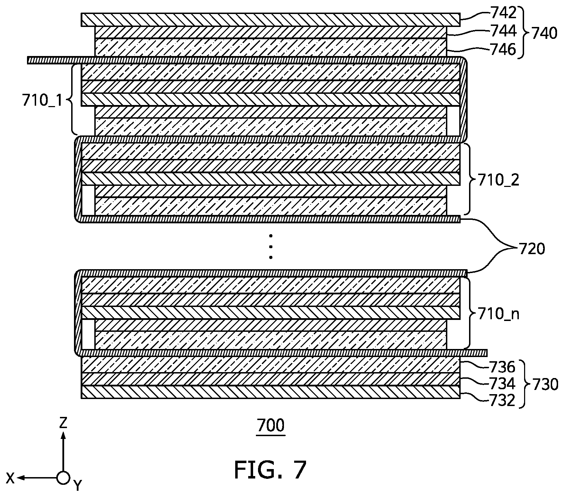

FIG. 7 illustrates an example of an electrode assembly 700 according to some embodiments of the present disclosure. In some embodiments, the electrode assembly 700 may include a plurality of first electrode plates 710_1 to 710_n, a separator 720, a second electrode plate 730, and a third electrode plate 740 that are stacked on each other. For example, the first electrode plates 710_1 to 710_n may be arranged and stacked in the same orientation. Herein, each electrode plate included in the first electrode plates 710_1 to 710_n may be the electrode plate 500 described above with reference to FIG. 5. That is, each of the first electrode plates 710_1 to 710_n may include a composite substrate, a first active material layer applied to a first surface of the composite substrate, and a second active material layer applied to a second surface of the composite substrate opposite the first surface. Furthermore, the composite substrate may include a first polymer substrate, a first metal layer disposed on a first surface of the first polymer substrate, and a second metal layer disposed on a second surface of the first polymer substrate opposite the first surface. In this case, the thickness of either the first metal layer or the second metal layer may be smaller than the thickness of the polymer substrate in a first direction (or the Z direction). For example, the first metal layer may include aluminum (Al) and the second metal layer may comprise copper (Cu).

In some embodiments, the separator 720 may be disposed between adjacent first electrode plates among the first electrode plates 710_1 to 710_n. Furthermore, the separator 720 may be disposed between each of the lowermost electrode plate (e.g. 710_n) among the first electrode plates 710_1 to 710_n and the second electrode plate 730 and between the uppermost electrode plate (e.g. 710_1) among each of the first electrode plates 710_1 to 710_n and the third electrode plate 740.

**In** some embodiments, the second electrode plate 730 and the third electrode plate 740 may include different types of layers. Specifically, the second electrode plate 730 may include a second polymer substrate 732, a third metal layer 734 disposed on a first surface of the second polymer substrate 732, and a third active material layer 736 disposed on the third metal layer 734. Furthermore, the third electrode plate 740 may include a third polymer substrate 742, a fourth metal layer 744 disposed on a first surface of the third polymer substrate 742, and a fourth active material layer 746 disposed on the fourth metal layer 744. **In** some embodiments, the electrode assembly 700 may be asymmetrically shaped.

**In** some embodiments, the third metal layer 734 and the fourth metal layer 744 may include different materials. For example, the third metal layer 734 may include, but is not limited to, Cu, and the fourth metal layer 744 may include, but is not limited to, Al. **In** this case, the third active material layer 736 may be a negative electrode active material layer and the fourth active material layer 746 may be a positive electrode active material layer. Herein, the third active material layer 736 may be disposed between the separator 720 and the third metal layer 734, and the fourth active material layer 746 may be disposed between the separator 720 and the fourth metal layer 744.

**In** some embodiments, the polymer substrate included in each of the first electrode plates 710_1 to 710_n and the polymer substrate included in each of the second electrode plate 730 and third electrode plate 740 may be the same.

In some embodiments, the composite substrate included in each of the second electrode plate 730 and the third electrode plate 740 may be in a form in which the metal layer and the active material layer are removed from one of the composite substrates included in the first electrode plates 710_1 to 710_n. In this case, one surface of the polymer substrate included in each of the second electrode plate 730 and the third electrode plate 740 may be exposed to the exterior. Accordingly, the safety of the electrode assembly 700 may be improved.

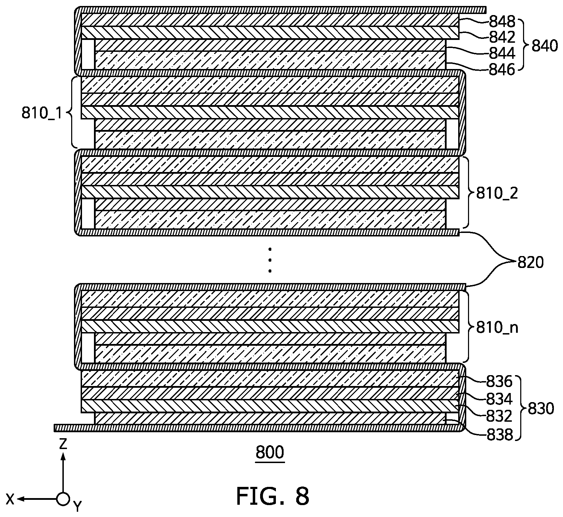

FIG. 8 illustrates an example of an electrode assembly 800 according to some embodiments of the present disclosure. In some embodiments, the electrode assembly 800 may include a plurality of first electrode plates 810_1 to 810_n, a separator 820, a second electrode plate 830, and a third electrode plate 840 that are stacked on each other. For example, the first electrode plates 810_1 to 810_n may be arranged and stacked in the same orientation. Herein, each electrode plate included in the first electrode plates 810_1 to 810_n may be the electrode plate 500 described above with reference to FIG. 5. That is, each of the first electrode plates 810_1 to 810_n may include a composite substrate, a first active material layer applied to a first surface of the composite substrate, and a second active material layer applied to a second surface of the composite substrate opposite the first surface. Furthermore, the composite substrate may include a first polymer substrate, a first metal layer disposed on a first surface of the first polymer substrate, and a second metal layer disposed on a second surface of the first polymer substrate opposite the first surface. In this case, the thickness of either the first metal layer or the second metal layer may be smaller than the thickness of the polymer substrate in a first direction (or the Z direction). For example, the first metal layer may include aluminum (Al) and the second metal layer may comprise copper (Cu).

**In** some embodiments, the separator 820 may be disposed between adjacent first electrode plates among the first electrode plates 810_1 to 810_n. Furthermore, the separator 820 may be disposed between each of the lowermost electrode plate (e.g. 810_n) among the first electrode plates 810_1 to 810_n and the second electrode plate 830 and between each of the uppermost electrode plate (e.g. 810_1) among the first electrode plates 810_1 to 810_n and the third electrode plate 840.

**In** some embodiments, the second electrode plate 830 and the third electrode plate 840 may include different types of layers. Specifically, the second electrode plate 830 may include a second polymer substrate 832, a third metal layer 834 disposed on a first surface of the second polymer substrate, and a third active material layer 836 disposed on the third metal layer 834. Furthermore, the third electrode plate 840 may include a third polymer substrate 842, a fourth metal layer 844 disposed on a first surface of the third polymer substrate 842, and a fourth active material layer 846 disposed on the fourth metal layer 844.

**In** addition, the second electrode plate 830 may further include a fifth metal layer 838 disposed on a second surface of the second polymer substrate 832, and the third electrode plate 840 may further include a sixth metal layer 848 disposed on a second surface of the third polymer substrate 842. **In** this case, the separator 820 may cover one surface of the fifth metal layer 838 and one surface of the sixth metal layer 848. Accordingly, the surface of the fifth metal layer 838 and the surface of the sixth metal layer 848 may not be exposed to the exterior.

**In** some embodiments, the third metal layer 834 and the fourth metal layer 844 may include different materials. For example, the third metal layer 834 may include, but is not limited to, Cu, and the fourth metal layer 844 may include, but is not limited to, Al. In this case, the third active material layer 836 may be a negative electrode active material layer and the fourth active material layer 846 may be a positive electrode active material layer. Herein, the third active material layer 836 may be disposed between the separator 820 and the third metal layer 834, and the fourth active material layer 846 may be disposed between the separator 820 and the fourth metal layer 844. Similarly, the fifth metal layer 838 and the sixth metal layer 848 may include different materials. For example, the fifth metal layer 838 may include, but is not limited to, Al, and the sixth metal layer 848 may include, but is not limited to, Cu.

In some embodiments, the composite substrate included in each of the first electrode plates 810_1 to 810_n and the composite substrate included in each of the second electrode plate 830 and third electrode plate 840 may be the same. Herein, in contrast to the active material layer being applied to the opposite surfaces of the composite substrate included in each of the first electrode plates 810_1 to 810_n, the active material layer may be applied to the first surface of the composite substrate included in each of the second electrode plate 830 and the third electrode plate 840. By using the same composite substrates for the first electrode plates 810_1 to 810_n, the second electrode plate 830, and the third electrode plates 840 to manufacture the electrode assembly 800 as described above, additional processing of the composite substrate may be omitted. In addition, the safety of the electrode assembly 800 may be improved by covering the second electrode plate 830 and the third electrode plate 840 with the separator 820.

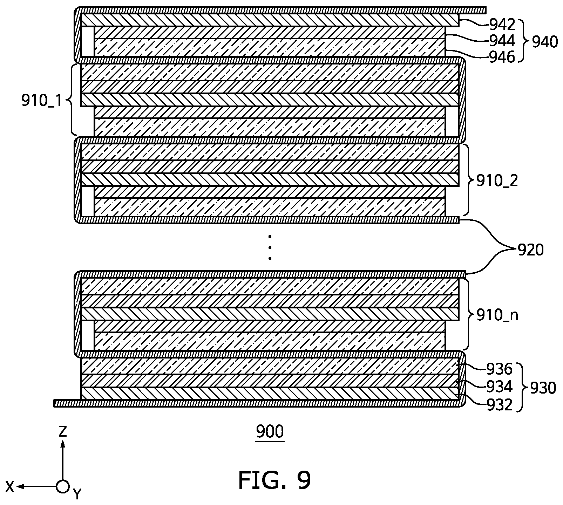

FIG. 9 illustrates an example of an electrode assembly 900 according some to embodiments of the present disclosure. In some embodiments, the electrode assembly 900 may include a plurality of first electrode plates 910_1 to 910_n, a separator 920, a second electrode plate 930, and a third electrode plate 940 that are stacked on each other. For example, the first electrode plates 910_1 to 910_n may be arranged and stacked in the same orientation. Herein, each electrode plate included in the first electrode plates 910_1 to 910_n may be the electrode plate 500 described above with reference to FIG. 5. That is, each of the first electrode plates 910_1 to 910_n may include a composite substrate, a first active material layer applied to a first surface of the composite substrate, and a second active material layer applied to a second surface of the composite substrate opposite the first surface. Furthermore, the composite substrate may include a first polymer substrate, a first metal layer disposed on a first surface of the first polymer substrate, and a second metal layer disposed on a second surface of the first polymer substrate opposite the first surface. In this case, the thickness of either the first metal layer or the second metal layer may be smaller than the thickness of the polymer substrate in a first direction (or the Z direction). For example, the first metal layer may include aluminum (Al) and the second metal layer may include copper (Cu).

In some embodiments, the separator 920 may be disposed between adjacent first electrode plates among the first electrode plates 910_1 to 910_n. Furthermore, the separator 920 may be disposed between the lowermost electrode plate (e.g. 910_n) among the first electrode plates 910_1 to 910_n and the second electrode plate 930 and between the uppermost electrode plate (e.g. 910_1) among the first electrode plates 910_1 to 910_n and the third electrode plate 940.

In some embodiments, the second electrode plate 930 and the third electrode plate 940 may include different types of layers. Specifically, the second electrode plate 930 may include a second polymer substrate 932, a third metal layer 934 disposed on a first surface of the second polymer substrate 932, and a third active material layer 936 disposed on the third metal layer 934. Furthermore, the third electrode plate 940 may include a third polymer substrate 942, a fourth metal layer 944 disposed on a first surface of the third polymer substrate 942, and a fourth active material layer 946 disposed on the fourth metal layer 944.

**In** some embodiments, the third metal layer 934 and the fourth metal layer 944 may include different materials. For example, the third metal layer 934 may include, but is not limited to, Cu, and the fourth metal layer 944 may include, but is not limited to, Al. **In** this case, the third active material layer 936 may be a negative electrode active material layer and the fourth active material layer 946 may be a positive electrode active material layer. Herein, the third active material layer 936 may be disposed between the separator 920 and the third metal layer 934, and the fourth active material layer 946 may be disposed between the separator 920 and the fourth metal layer 944.

**In** some embodiments, the polymer substrate included in each of the first electrode plates 910_1 to 910_n and the polymer substrate included in each of the second electrode plate 930 and third electrode plate 940 may be the same.

**In** some embodiments, the composite substrate included in each of the second electrode plate 930 and the third electrode plate 940 may be in a form in which the metal layer is removed from one of the composite substrates included in each of the plurality of first electrode plates 910_1 to 910_n. **In** this case, one surface of the polymer substrate included in each of the second electrode plate 930 and the third electrode plate 940 may be exposed to the exterior. Furthermore, the separator 920 may cover the second surface of the second polymer substrate and the second surface of the third polymer substrate. Accordingly, the safety of the electrode assembly 900 may be improved.

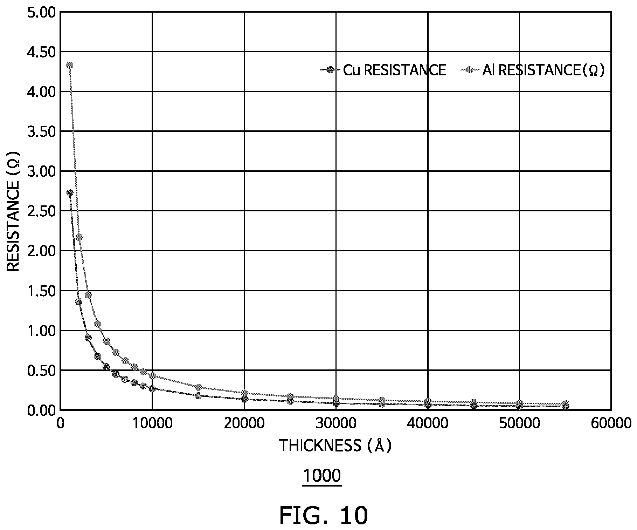

FIG. 10 illustrates a graph 1000 showing resistance values according to the thickness of metal layers disposed on opposite surfaces of a polymer substrate according to some embodiments of the present disclosure. Referring to FIG. 10, the graph 1000 shows resistance values as a function of the thickness of an Al layer and a Cu layer coated on opposite surfaces of a PET material, i.e., a polymer substrate included in a composite substrate (e.g., 100 in FIG. 1), in a case where the PET material is 5.0 µm thick. Herein, the polymer substrate and the metal layers each having a width of 5.6 cm and a length of 90 cm were used. The corresponding results may be illustrated as in Table 1 below.

**[Table 1]**

| Thickness (Å) | Cu Resistance (Ω) | Al Resistance (Ω) |
|---|---|---|
| 1000 | 2.73 | 4.34 |
| 2000 | 1.37 | 2.17 |
| 3000 | 0.91 | 1.45 |
| 4000 | 0.68 | 1.08 |
| 5000 | 0.55 | 0.87 |
| 6000 | 0.46 | 0.72 |
| 7000 | 0.39 | 0.62 |
| 8000 | 0.34 | 0.54 |
| 9000 | 0.30 | 0.48 |
| 10000 | 0.27 | 0.43 |
| 15000 | 0.18 | 0.29 |
| 20000 | 0.14 | 0.22 |
| 25000 | 0.11 | 0.17 |
| 30000 | 0.09 | 0.14 |

Referring to Table 1, it may be seen that for Cu, the resistance value decreases sharply until a thickness of 5000 Å, after which the resistivity decreases gradually. For Al, it may be seen that the resistance decreases sharply until 9000 Å, after which the resistance decreases gradually. Therefore, in a case where the thickness of the Al layer is 0.9 µm or more and the thickness of the Cu layer is 0.5 µm or more, the performance of a secondary battery prepared using this may be improved. Furthermore, since the Al and Cu layers are almost saturated in resistance in a case where the thicknesses of the Al layer and the Cu layer are greater than 2.0 µm and 1.5 µm, respectively, it may be desirable that the Al layer has a film thickness of 2.0 µm or less and the Cu layer has a film thickness of 1.5 um or less, when considering production aspects and the energy density of the battery.

Comparative Examples and Examples for evaluating the performance of cells in a case where PET is 5.0 µm thick may be illustrated as in Table 2 and Table 3 below.

**[Table 2]**

| | Cu Substrate Thickness (µm) | Al Substrate Thickness (µm) | Total Thickness | Cell Capacity (0.2C) | High Rate Discharge (2.0C/0.2C) |
|---|---|---|---|---|---|
| Comp. Ex. | 6.0 | 9.0 | 15.0 | 1785 | 84.1 % |

**[Table 3]**

| | | | | | |
|---|---|---|---|---|---|
| | Cu | Al | Total | Cell | High Rate |

| | Thickness (µm) | Thickness (µm) | Thickness (µm) | Capacity (0.2C) | Discharge (2.0C/0.2C) |
|---|---|---|---|---|---|
| Ex. 1 | 0.5 | 0.5 | 6.0 | 1856 | 70.2 % |
| Ex. 2 | 0.5 | 1.0 | 6.5 | 1853 | 83.2 % |
| Ex. 3 | 0.5 | 1.5 | 7.0 | 1848 | 83.6 % |
| Ex. 4 | 1.0 | 0.5 | 6.5 | 1852 | 75.3 % |
| Ex. 5 | 1.0 | 1.0 | 7.0 | 1845 | 83.4 % |
| Ex. 6 | 1.0 | 1.5 | 7.5 | 1846 | 83.5 % |
| Ex. 7 | 1.0 | 2.0 | 8.0 | 1839 | 83.9 % |
| Ex. 8 | 1.0 | 2.5 | 8.5 | 1833 | 83.6 % |
| Ex. 9 | 1.5 | 0.5 | 7.0 | 1846 | 75.6 % |
| Ex. 10 | 1.5 | 1.0 | 7.5 | 1845 | 83.7 % |
| Ex. 11 | 1.5 | 1.5 | 8.0 | 1840 | 83.6 % |
| Ex. 12 | 1.5 | 2.0 | 8.5 | 1836 | 83.5 % |
| Ex. 13 | 1.5 | 2.5 | 9.0 | 1830 | 83.8 % |
| Ex. 14 | 1.5 | 3.0 | 9.5 | 1824 | 83.6 % |
| Ex. 15 | 2.0 | 0.5 | 7.5 | 1840 | 75.1 % |
| Ex. 16 | 2.0 | 1.0 | 8.0 | 1832 | 84.1 % |
| Ex. 17 | 2.0 | 1.5 | 8.5 | 1837 | 82.9 % |
| Ex. 18 | 2.0 | 2.0 | 9.0 | 1836 | 83.7 % |
| Ex. 19 | 2.0 | 2.5 | 9.5 | 1832 | 83.6 % |
| Ex. 20 | 2.0 | 3.0 | 10.0 | 1830 | 83.5 % |

Referring to Table 2 and Table 3, in a case where opposite surfaces of a 5.0 µm thick PET material are coated with Al and Cu layers of respective thicknesses, the trade-off between cell capacity and high rate discharge may be seen. For example, the high rate discharge may be the ratio of the discharge capacity upon discharge of a cell at a rate of 2.0C to the discharge capacity upon discharge of a cell at a rate of 0.2C. It may be seen that in a case where the thickness of the Al layer is 1.0 µm or more and the thickness of the Cu layer is 0.5 µm or more, the high rate discharge is equivalent to those of the conventional substrate (i.e., substrates of Comparative Examples). In conclusion, it may be desirable that the thickness of the Al layer is from 1.0 µm to 2.0 µm and the thickness of the Cu layer is from 0.5 µm to 1.5 µm.

This configuration allows the thicknesses of the Al and Cu layers to be advantageous, thereby improving the performance of the secondary battery while reducing the thickness of the composite substrate.

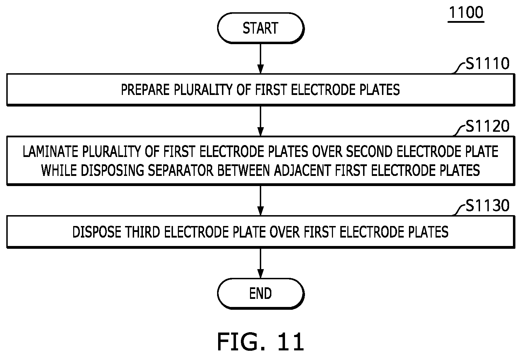

FIG. 11 illustrates a flowchart showing an example of an electrode assembly manufacturing method 1100 according to some embodiments of the present disclosure. In some embodiments, the electrode assembly manufacturing method 1100 may be started by preparing a plurality of first electrode plates (S1110). Specifically, a first metal layer (e.g., Al) may be disposed/coated on a first surface of a polymer substrate using a first masking plate. Furthermore, a second metal layer (e.g., Cu) may be disposed/coated on a second surface of the polymer substrate opposite the first surface using a second masking plate. Herein, the width of an opening of the first masking plate may be smaller than the width of an opening of the second masking plate.

Thereafter, an operation of laminating the first electrode plates over a second electrode plate while disposing a separator between the first electrode plates may be performed (S1120). That is, the second electrode plate may be disposed under the first electrode plates. Subsequently, a third electrode plate may be disposed over the first electrode plates (S1130). In this case, a separator may be disposed between the first electrode plates and the second electrode plate and between the first electrode plates and the third electrode plate. Further, the second electrode plate and the third electrode plate may be different from each other. That is, the second electrode plate and the third electrode plate may include different types of layers.

## Claims

1. An electrode assembly comprising:
a plurality of first electrode plates (610, 710, 810, 910) stacked on each other; and
a separator (620, 720, 820, 920) disposed between adjacent first electrode plates (610, 710, 810, 910),
wherein each of the first electrode plates (610, 710, 810, 910) comprises a composite substrate (100), a first active material layer (510) applied to a first surface of the composite substrate (100), and a second active material layer (520) applied to a second surface of the composite substrate (100), the second surface of the composite substrate (100) opposite the first surface of the composite substrate (100),
wherein the composite substrate (100) comprises:
a first polymer substrate (110);
a first metal layer (120) disposed on a first surface of the first polymer substrate (110); and
a second metal layer (130) disposed on a second surface of the first polymer substrate (110), the second surface of the first polymer substrate (110) opposite the first surface the first polymer substrate (110),
wherein the first metal layer (120) and the second metal layer (130) comprise different materials, and
the first metal layer (120) and/or the second metal layer (130) have a thickness smaller than the thickness of the polymer substrate (110) in a first direction.

2. The electrode assembly as claimed in claim 1, further comprising:
a second electrode plate (630, 730, 830, 930) disposed under the first electrode plates (610, 710, 810, 910); and
a third electrode plate (640, 740, 840, 940) disposed over the first electrode plates (610, 710, 810, 910),
wherein the separator (620, 720, 820, 920) is disposed between the first electrode plates (610, 710, 810, 910) and the second electrode plate (630, 730, 830, 930),
the separator (620, 720, 820, 920) is disposed between the first electrode plates (610, 710, 810, 910) and the third electrode plate (640, 740, 840, 940), and
the second electrode plate (630, 730, 830, 930) and the third electrode plate (640, 740, 840, 940) include different types of layers.

3. The electrode assembly as claimed in claim 1, wherein the second electrode plate (630, 730, 830, 930) comprises a second polymer substrate (632, 732, 832, 932), a third metal layer (634, 734, 834, 934) disposed on a first surface of the second polymer substrate (632, 732, 832, 932), and a third active material layer (636, 736, 836, 936) disposed on the third metal layer (634, 734, 834, 934),
the third electrode plate (640, 740, 840, 940) comprises a third polymer substrate (642, 742, 842, 942), a fourth metal layer (644, 744, 844, 944) disposed on a first surface of the third polymer substrate (642, 742, 842, 942), and a fourth active material layer (646, 746, 846, 946) disposed on the fourth metal layer (644, 744, 844, 944),
the third metal layer (634, 734, 834, 934) and the fourth metal layer (644, 744, 844, 944) comprise different materials, and
the third active material layer (636, 736, 836, 936) and the fourth active material layer (646, 746, 846, 946) comprise different materials.

4. The electrode assembly as claimed in claim 3, wherein the third active material layer (636, 736, 836, 936) is disposed between the separator (620, 720, 820, 920) and the third metal layer (634, 734, 834, 934), and
the fourth active material layer (646, 746, 846, 946) is disposed between the separator (620, 720, 820, 920) and the fourth metal layer (644, 744, 844, 944).

5. The electrode assembly as claimed in claim 4, wherein a second surface of the second polymer substrate (632, 732, 832, 932) and a second surface of the third polymer substrate (642, 742, 842, 942) are exposed to an exterior of the electrode assembly.

6. The electrode assembly as claimed in claim 4, wherein the second electrode plate (630) further comprises a fifth metal layer (638) disposed on a second surface of the second polymer substrate (632),
the third electrode plate (640) further comprises a sixth metal layer (648) disposed on a second surface of the third polymer substrate (642), and
one surface of the fifth metal layer (638) and one surface of the sixth metal layer (648) are exposed to an exterior of the electrode assembly.

7. The electrode assembly as claimed in claim 4, wherein the separator (620, 720, 820, 920) covers a second surface of the second polymer substrate (632, 732, 832, 932) and a second surface of the third polymer substrate (642, 742, 842, 942).

8. The electrode assembly as claimed in claim 4, wherein the second electrode plate (830) further comprises a fifth metal layer (838) disposed on a second surface of the second polymer substrate (832),
the third electrode plate (840) further comprises a sixth metal layer (848) disposed on a second surface of the third polymer substrate (842), and
the separator (820) covers one surface of the fifth metal layer (838) and one surface of the sixth metal layer (848).

9. The electrode assembly as claimed in claim 1, wherein the first metal layer (120) has a width smaller than the width of the second metal layer (130) in a second direction perpendicular to the first direction.

10. The electrode assembly as claimed in claim 9, wherein a difference between a width of the first metal layer (120) and a width of the second metal layer (130) is 3 mm or less.

11. The electrode assembly as claimed in claim 9, wherein the first metal layer (120) has a length smaller than the length of the second metal layer (130) in a third direction perpendicular to both the first direction and the second direction.

12. The electrode assembly as claimed in claim 11, wherein a difference between the length of the first metal layer (120) and the length of the second metal layer (130) is 3 mm or less.

13. The electrode assembly as claimed in claim 1, wherein the thickness of the first metal layer (120) is greater than or equal to 1.0 µm and less than or equal to 2.0 µm.

14. The electrode assembly as claimed in claim 1, wherein the thickness of the second metal layer (130) is greater than or equal to 0.5 µm and less than or equal to1.5 µm.

15. The electrode assembly as claimed in claim 1, wherein the thickness of the polymer substrate greater than or equal to 5.0 µm and less than or equal to 7.0 µm.
